(19) **Europäisches Patentamt**
**European Patent Office**
**Office européen des brevets**

(11) **EP 1 979 284 B1**

(12) **EUROPEAN PATENT SPECIFICATION**

(45) Date of publication and mention
of the grant of the patent:
**30.05.2012 Bulletin 2012/22**

(51) Int Cl.:
*C03C 13/00* (2006.01)     *C04B 35/14* (2006.01)
*C04B 35/622* (2006.01)

(21) Application number: **07701057.7**

(22) Date of filing: **24.01.2007**

(86) International application number:
**PCT/KR2007/000416**

(87) International publication number:
**WO 2007/086677 (02.08.2007 Gazette 2007/31)**

(54) **A BIODEGRADABLE CERAMIC FIBER COMPOSITION FOR A HEAT INSULATING MATERIAL**

BIOLOGISCH ABBAUBARE KERAMIKFASERZUSAMMENSETZUNG FÜR EIN
WÄRMEISOLIERUNGSMATERIAL

COMPOSITION BIODÉGRADABLE À BASE DE FIBRES CÉRAMIQUES POUR MATÉRIAU
D'ISOLATION THERMIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **25.01.2006   KR 20060007811**

(43) Date of publication of application:
**15.10.2008 Bulletin 2008/42**

(73) Proprietor: **Kcc Corporation
Seocho-ku
Seoul 137-855 (KR)**

(72) Inventors:
• **OH, Kwang Suk**
  **Yongin-si**
  **Gyeonggi-do 446-744 (KR)**
• **KIM, Hyun Soo**
  **Gyeonggi-do 449-912 (KR)**

• **SEO, Geum Deok**
  **Ulsan-si 689-801 (KR)**
• **KIM, Hyung Sung**
  **Gyeonggi-do 443-727 (KR)**
• **JUNG, Young Sung**
  **Gyeonggi-do 449-170 (KR)**
• **JUNG, Won Sik**
  **Gyeonggi-do 449-912 (KR)**

(74) Representative: **Wichmann, Hendrik et al
Wuesthoff & Wuesthoff
Schweigerstrasse 2
81541 München (DE)**

(56) References cited:
**EP-A2- 1 323 687      EP-A2- 1 323 687
EP-A2- 1 544 177      DE-A1- 19 512 145
FR-A1- 2 690 438      US-A- 5 714 421
US-A- 5 714 421       US-A- 6 136 735
US-A- 6 136 735       US-A1- 2003 162 019**

Printed by Jouve, 75001 PARIS (FR)

**EP 1 979 284 B1**

**Description**

**FIELD OF THE INVENTION**

The present invention relates to a biodegradable fiber composition for high-temperature heat insulating material, more specifically, a biodegradable fiber composition for high-temperature heat insulating material comprising network former oxide ($SiO_2$) used as a main component of the fiber composition for high-temperature heat insulating material, modifier oxides ($CaO$, $MgO$, $Na_2O$ and $K_2O$) and intermediate oxides ($ZrO_2$ and $Al_2O_3$) with appropriate ratios, the composition having good biodegradability; good high-temperature properties by controlling the amount of crystallite precipitating and growing during heat treatment; good biodegradability even in high-viscosity region of high $SiO_2$ content through controlling the content of $R_2O$ wherein R is alkali metal and thus decreased harmfulness to human body when the fiber powder is inhaled; and good thermal, mechanical properties such as good heat resistance, good compressive strength and good restoration sufficient to be used at high temperature through controlling the content of $CaO + MgO$; and from which the fiber can be produced easily and economically by using conventional equipments with high production yield.

**BACKGROUND ART**

As the inorganic fiber generally has a low thermal conductivity and a thin and long shape, it is commonly used as heat insulating material at high and low temperature, a soundproofing material, a sound-absorbing material, a filtering material and the like. Such inorganic fiber is classified into glass wool, rock wool(mineral wool) and ceramic fiber, depending on its heat resistance temperature. Glass wool and rock wool have a relatively low heat resistance temperature whereas ceramic fiber shows linear shrinkage as low as 3% or less at 1000 °C or higher, and also has a good water resistance and chemical durability.

As a refractory ceramic fiber (RCF) having good properties at high temperature, there are $Al_2O_3$-$SiO_2$ (RCF-AS) based fiber having a safe use temperature of 1100-1260 °C, and $Al_2O_3$-$SiO_2$-$ZrO_2$ (RCF-ASZ) based fiber having a safe use temperature of about 1430 °C.

The method for preparing the RCF inorganic fiber comprisies: melting a raw material composition satisfying desired properties, fiberizing the melt, and then heat-treating or treating in accordance with the purpose. As the method for fiberization, there are a blowing method using pressured air or steam, and a spinning method dropping a melt on a cylinder spinning at a high speed. The RCF inorganic fiber is used for a high-temperature heat insulating material since it exhibits a good property in heat-resistance temperature.

According to a recent report, a fiber with a low solubility in body fluid, when inhaled in a disintegrated and fine form and accumulated in the lung, may do harm to human health. Therefore, there recently have been heated researches in order to minimize the harmfulness of fiber by increasing a physiological solubility and at the same time to satisfy a need for a high temperature property.

The related arts in connection with the above are summarized as follows:

U.S. Pat. No. 5,332,699 discloses a $CaO$-$MgO$-$SiO_2$ (CMS) based ceramic fiber as a RCF inorganic fiber, prepared by adding $CaO$ and $MgO$ instead of $Al_2O_3$ to conventional RCF inorganic fiber. Such CMS based ceramic fiber has an average fiber diameter of 3.5 $\mu$m or thinner and a solubility in an artificial body fluid of 0.02 wt% Si/day which is a good solubility characteristics. However, it satisfies a refractory test at 840°C for 2 hours only, and thus has a poor high temperature property in comparison with conventional RCF inorganic fibers.

U.S. Pat. Nos. 5,994,247; 5,955,389; 5,928,975 and 5,811,360 etc. are improvements of the above U.S. Pat. No. 5,332,699. However, the inorganic fibers prepared by the methods disclosed therein have a linear shrinkage at 1000 °C of less than 3.5%, and thus exhibit poor properties in comparison with conventional RCF inorganic fibers. Also, in case of producing fiber, viscosity of melt is low and so fiberization yield is low.

EP 1 323 687 describes a ceramic fiber composition comprising 75-80 wt% of $SiO_2$, 13-25 wt% of $CaO$, 1-8 wt% of $MgO$, 0.5-3 wt% of $ZrO_2$, and 0-0.5 wt% $Al_2O_3$, wherein ($ZrO_2$+$Al_2O_3$) is contained 0.5-3 wt% and ($CaO$+$MgO$) is contained 15-26 wt%.

EP 1 544 177 discloses fibres having a composition in wt% of 65-86% $SiO_2$, <10% $MgO$, 14-28% $CaO$, <2% $Al_2O_3$, <3% $ZrO_2$, <5% $B_2O_3$, <5% $P_2O_5$, with 72%< $SiO_2$+$ZrO_2$+$B_2O_3$+5*$P_2O_5$, and 95%< $SiO_2$+$CaO$+$MgO$+$Al_2O_3$+$ZrO_2$+$B_2O_3$+$P_2O_5$.

U.S. Pat. Nos. 5,874,375 and 6,025,288 disclose that SMZ based ceramic fiber consisting of $SiO_2$, $MgO$ and $ZrO_2$ has a biodegradability, and furthermore, a thermal linear shrinkage of 4.5% or less according to contents of components, for heat insulating materials at high temperature of 1000-1260 °C or higher.

However, the fiber prepared by the above method has an average fiber diameter of 6 $\mu$m or thicker, and so if prepared as fiber, heat insulating performance thereof at high temperature becomes worse. Also, since natural raw materials providing MgO such as dolomite, magnesite, magnesia, periclase, talc or the like mostly contain CaO in large amount, in order to satisfy the conditions of the above patents, the relatively expensive MgO should be purified to high purity and used, and so they are not appropriate economically to be used as a raw material in mass production.

Accordingly, there is an intensive requirement to develop a new fiber as inorganic fiber for high-temperature heat insulating materials which has biodegradability in body fluid when inhaled into human body, chemical durability, good thermal, mechanical properties such as good heat resistance at high temperature, good compressive strength and good restoration after compression; gives high production yield suitable for mass production providing competitive price; is easy to handle; and can be produced from relatively cheap raw materials.

## SUMMARY OF THE INVENTION

As a result of intensive effort to solve the above-mentioned problems, the present inventors could prepare a fiber having good high-temperature properties and improved biodegradability by blending network former oxide ($SiO_2$) used as a main component of inorganic fiber for high-temperature heat insulating material, modifier oxides (CaO, MgO, $Na_2O$ and $K_2O$) and intermediate oxides ($ZrO_2$ and $Al_2O_3$) with appropriate ratios to form a fiber composition, and particularly, could prepare a fiber having good biodegradability even in high-viscosity region of high $SiO_2$ content, through controlling the content of $R_2O$ wherein R is alkali metal. Also, the present inventors could produce the fiber economically by improving the production yield.

Therefore, the objective of the present invention is to provide a biodegradable fiber composition for high-temperature heat insulating material which has decreased harmfulness to human body when the fiber is inhaled, and good thermal, mechanical properties such as good heat resistance, good compressive strength and good restoration sufficient to be used at high temperature, and from which the fiber can be produced easily and economically by using conventional equipments with improved yield.

## DETAILED DESCRIPTION OF THE INVENTION

The present invention relates to a biodegradable fiber composition for high-temperature heat insulating material comprising 75-80 wt% of $SiO_2$, 13-20 wt% of CaO, 1-8 wt% of MgO, 0.5 wt% or less of $Al_2O_3$, 0.5-3 wt% of $ZrO_2$, 2.5-4 wt% of $R_2O$ wherein R is an alkali metal, and 1 wt% or less of impurities comprising $Fe_2O_3$, $TiO_2$, $B_2O_3$ and $P_2O_5$; preferably 0.5-3 wt% of $Al_2O_3$ + $ZrO_2$, 15-26 wt% of CaO + MgO and 2.5-3.5 wt% of $Na_2O$.

In preparing a fiber with the fiber composition according to the present invention, the conventional methods such as a blowing method or a spinning method can be employed. The ideal viscosity of the fiber composition needed for utilizing the aforementioned conventional methods should be low as 20-100 poise, or similar to that of the conventional $Al_2O_3$-$SiO_2$ (RCF-AS) based composition or not different significantly therefrom. Concretely, the viscosity of the same composition depends on the temperature. That is, if the melt temperature during fiberization is high, the viscosity of the melt will get lower, and on the contrary, if the melt temperature during fiberization is low, the viscosity of the melt will get higher, thus affecting the fiberization. When the viscosity of a fiber composition is too low at the fiberization temperature, there are problems that a short and thin fiber is produced and the fiberization yield is too low due to a high content of unfiberized shot. In contrast, if the viscosity is too high, there are problems of resulting fiber having large fiber diameter and length, with a high proportion of coarse unfiberized shot. Since the viscosity of glass melt generally depends on the temperature and composition of the glass, in order to maintain proper fiberization viscosity, a proper composition design is needed, and in case of high-viscosity composition, the fiberization should be conducted at higher temperature, and thus a proper control of viscosity is needed around fiberization temperature. Also, to determine suitable fiberization characteristics, the properties of produced fiber (fiber diameter, shot content, etc.) can be measured and compared to those of conventional RCF ($Al_2O_3$-$SiO_2$ system).

Hereunder is given a more detailed description based on components of the biodegradable fiber composition according to the present invention, and unless mentioned otherwise, the unit, wt%, used herein is based on total weight of the composition.

First, it is preferable that the biodegradable fiber composition according to the present invention comprises 75-80 wt% of $SiO_2$ as a main component of fiber. If the content of $SiO_2$ exceeds 80 wt%, there are drawbacks of the difficulty in melting a fiber composition and a elevated fiberization viscosity thus causing fiber diameter and length to be increased and more amount of coarse unfiberized shot to be generated. In contrast, if the content of $SiO_2$ is less than 75 wt %, the contents of CaO and MgO should be increased to improve the biodegradability, which results in the problems of the rise of the cost of raw material, the high degree of shortening of a fiber length thus decreasing the stiffness, the difficulty in fiberization due to the increase of a unfiberized shot content, and the deterioration of property due to the increase of thermal shrinkage.

The biodegradable fiber composition according to the present invention comprises CaO and MgO which are modifier oxides to increase a solubility of the produced fiber in body fluid.

It is preferable that the fiber composition according to the present invention comprises CaO in an amount of 13-20 wt%. If the content is less than 13 wt%, the biodegradability, i.e. the solubility in body fluid, is decreased. In contrast, if the content exceeds 20 wt%, the amount of crystallite precipitating during the production of fiber is increased. Thus, the $SiO_2$ content in the produced fiber is relatively decreased thereby giving problems of the increase of thermal linear shrinkage at high temperature.

It is preferable the fiber composition according to the present invention comprises 1-8 wt% of MgO which is another modifier oxide to increase a biodegradability of the fiber. If the content of MgO is less than 1 wt%, there are problems of the decrease of the biodegradability in body fluid or the decrease of the effect of inhibiting the growth of fiber crystallite during the production of the fiber. In contrast, if the content exceeds 8 wt%, there are problems of the increase of the fiberization viscosity near the eutectic point of Diopside and Wollastonite.

Specifically, it is preferable that the fiber composition according to the present invention comprises CaO and MgO as modifier oxides in the combined amount of 15-26 wt% of CaO + MgO. If the combined amount is less than 15 wt%, the solubility in body fluid is decreased, whereas if the combined amount exceeds 26 wt%, the amount of crystalline phase formed at a high temperature is increased and thus the durability is deteriorated.

Further, when the combined amount of CaO and MgO is 15-26 wt%, it is more preferable that content of MgO is 2-8 wt% to have a high dissolution rate constant to body fluid.

The fiber composition according to the present invention comprises 2.5-4 wt%, preferably 2.6-3.7 wt%, more preferably 2.6-3.6 wt% of $R_2O$ wherein R is alkali metal to increase the biodegradability, and decrease the fiberization viscosity and thus increase the production yield. If the content of $R_2O$ is less than 2.5 wt%, the effect on the viscosity of the melt is insignificant and thus not helpful to increase the production yield. In contrast, if the content exceeds 4 wt%, the thermal linear shrinkage (1100°C/24 hours) becomes 10% or greater, which causes a problem in heat resistance.

For the fiber composition according to the present invention, R is preferably Na and/or K. It is preferable that the fiber composition comprises 2.5-3.5 wt%, more preferably 2.5-3.3 wt% of $Na_2O$, and 0-0.6 wt%, more preferably 0-0.5 wt% of $K_2O$. The above content ranges are suitable for increasing the production yield by decreasing the viscosity of the melt without significant loss of the thermal linear shrinkage.

Actually, in case of producing the fiber by a blowing method or a spinning method which are conventional RCF inorganic fiber production methods, conventional $Al_2O_3$-$SiO_2$ (RCF-AS) based ceramic fiber having relatively low $SiO_2$ content, about 50%, usually shows a production yield of about 80%. However, if the $SiO_2$ content increases, it becomes difficult to melt the composition, the fiberization viscosity increases and thus the content of unfiberized shot increases, and also the fiber production yield decreases as a whole.

If the content of $R_2O$ is beyond the above range, it becomes difficult to maintain the fiberization viscosity appropriately and thus the production yield decreases. While in the present invention, the fiberization viscosity of the high-viscosity fiber composition with high $SiO_2$ content is controlled appropriately by maintaining the content of $R_2O$ within the above range, and thus the production yield can increase.

The composition according to the present invention may comprise $Al_2O_3$ and $ZrO_2$ as intermediate formation oxide. $Al_2O_3$ is an optional component in the present invention, and it is preferable to control its content strictly less than 0.5 wt% in the whole fiber composition. If the content of $Al_2O_3$ exceeds 0.5 wt%, there are problems of the decrease of the solubility in body fluid, and particularly, the increase of the linear shrinkage of the fiber.

The content of $ZrO_2$ is preferably 0.5-3 wt% in the whole fiber composition. If the content of $ZrO_2$ exceeds 3 wt%, the solubility in body fluid is severely decreased, whereas if the content of $ZrO_2$ is less than 0.5 wt%, there are difficulties in melting and fiberizing. The combined content of $ZrO_2$ + $Al_2O_3$ is preferably 0.5-3 wt%, more preferably 0.5-2 wt%. If the combined amount is less than 0.5 wt%, the durability of the fiber at high temperature is deteriorated, and the melting becomes difficult and the fiberization yield is lowered due to the increase of melt viscosity. In contrast, if the combined amount exceeds 3 wt%, the solubility of fiber in body fluid is decreased and thus deteriorating the biodegradability.

In addition, the composition according to the present invention can further comprise optionally impurities comprising $Fe_2O_3$, $TiO_2$, $B_2O_3$, and $P_2O_5$ in an amount of l wt% or less. The impurities may be introduced into the composition depending on the purity of raw material used to prepare the fiber composition. If the impurity content exceeds 1 wt%, the reaction of the components in the fiber composition is interrupted and the properties of the produced fiber may be deteriorated.

The fiber according to the present invention, which is produced with the above-mentioned fiber composition, is characterized in having 30 wt% or less of shot content giving high fiberization yield, 6 μm or thinner of average fiber diameter giving good heat insulating performance, and a thermal linear shrinkage not exceeding 3% even after heat treatment at 1100 °C for 24 hours giving good high-temperature property. In addition to the aforementioned superior properties of the fiber according to the present invention, the conventional fiber preparation process can be still utilized to an economical advantage, giving high production yield.

The present invention is explained in more detail based on the following Examples without limitations thereby.

[Test Methods]

1. Fiberizability: The fiberizability was determined based on the possibility of producing fiber with a conventional fiber preparation equipment under a condition where the unfiberized shot content is 30% or less and the average fiber diameter is 6 $\mu$m or thinner.

2. Average fiber diameter: The average fiber diameter was determined by measuring more than 10 times, using an electron microscope at a magnification of larger than 1000X.

3. Unfiberized shot content: The unfiberized shot content was determined according to ASTM C892. The fiber was thermally treated at 1260 °C for 5 hours and a test sample was weighed 10 g with a precision of 0.0001 g ($W_0$). The test sample was put through 70 mesh sieve using a rubber rod. After putting the test sample through 70 mesh sieve, residual particles were weighed ($W_1$) and the unfiberized shot content ($W_s$) was calculated using the below equation 1.

$$[\text{Equation 1}]$$
$$W_s = \frac{W_1}{W_0} \times 100$$

wherein, $W_s$ represents the unfiberized shot content, $W_0$ represents the initial particle weight and $W_1$ represents the weight of the residual particles.

4. Melting viscosity ratio: The temperature of molten fiber composition is as high as 2000 °C or higher, and thus it is impossible to measure the fiberization viscosity when draining the melt from a melting furnace. Accordingly, the relative melting viscosity ratio was calculated theoretically using the below equation 2.

$$[\text{Equation 2}]$$
$$\frac{\eta_2}{\eta_1} = \frac{F_1 R_2^{2.5}}{F_2 R_1^{2.5}}$$

wherein, $\eta_1$ represents a reference viscosity which is a viscosity of the $Al_2O_3$-$SiO_2$ (RCF-AS) based fiber composition of Comparative Example I with good production yield, being set to 1, and $\eta_2$ represents a relative viscosity for each of the other Examples and Comparative Examples; and
$F_1$, $F_2$: Drained melt amount per hour (kg)
$R_1$, $R_2$: Effective diameter of orifice (mm)
[R = the radius of orifice - tan 15°$\times$ {27.99 - distance between the orifice and needle (mm)}]

5. Production yield: The ratio of the produced fiber amount to the Drained melt amount for a given time was calculated using the below equation 3.

$$[\text{Equation 3}]$$

$$Production\ yield\ (\%) = [Produced\ fiber\ amount\ /hour]\ /\ [Drained\ melt\ amount\ /hour]$$

6. Thermal linear shrinkage: The high-temperature property of a refractory fiber for a high-temperature insulating material is commonly determined by a thermal linear shrinkage measured from the length change of article formed with the produced fiber, at a high temperature. To determine the thermal linear shrinkage of the fiber, a test sample was prepared with the fiber as a pad shape. A pad was made by sufficiently dispersing 220 g of fiber in a 0.2 % of starch water solution and smoothing the uneven dispersed fiber to decrease surface deviation followed by draining through a bottom of a mold(300x200 mm). Then, the pad-shaped test sample was prepared by sufficiently drying the pad in an oven at 50°C for more than 24 hours and cutting into a size of 150x100x25 mm. Test marks were made on the pad-shaped test samples using sufficiently refractory materials such as platinum, ceramic or the like. After measuring the distances between the test marks using vernier calipers, the test samples were placed in a furnace, heated at 1100 °C for 24 hours, and cooled slowly. The results were compared with each other by measuring the distances between the test marks, and the thermal linear shrinkages were calculated using the below equation 4.

[Equation 4]

$$Thermal\ linear\ shrinkage\ (\%) = \frac{(l_0 - l_1)}{l_0} \times 100$$

wherein, $l_0$ represents an initial average distance between the test marks(mm), and $l_1$ represents an average distance after heating between the test marks(mm).

7. Solubility constant in an artificial body fluid: To evaluate the solubility of the prepared fiber in body fluid, the dissolution rate constant was obtained as described below. An in vivo biodegradability of fiber was evaluated by a dissolution in an artificial body fluid. A dissolution rate constant ($K_{dis}$) was calculated using the below equation 5 with the results shown in the following TABLE 3.

[Equation 5]

$$K_{Si} = [d_0\,\rho\,(1-M_{Si}/M_0)^{0.5}]/2t$$

$$K_{Ca} = [d_0\,\rho\,(1-M_{Ca}/M_0)^{0.5}]/2t$$

$$K_{dis} = [d_0\,\rho\,(1-M/M_0)^{0.5}]/2t$$

wherein, $d_0$ means an initial average fiber diameter, $\rho$ represents an initial density of fiber, $M_0$ represents an initial mass of fiber, M represents a mass of residual fiber after dissolution, and t represents a test time.

In the following TABLE 1 are shown the contents (g) of ingredients in 1 L of an artificial body fluid (Gamble solution which is a physiological saline solution) used to determine the dissolution rate of fiber.

**TABLE 1**

| Ingredients | Content (g/L) |
|---|---|
| NaCl | 7.120 |
| $MgCl_2 \cdot 6H_2O$ | 0.212 |
| $CaCl_2 \cdot 2H_2O$ | 0.029 |
| $Na_2SO_4$ | 0.079 |
| $Na_2HPO_4$ | 0.148 |
| $NaHCO_3$ | 1.950 |
| $Na_2$-tartrate$\cdot 2H_2O$ | 0.180 |
| $Na_3$-citrate$\cdot 2H_2O$ | 0.152 |
| 90% Lactic acid | 0.156 |
| Glycine | 0.118 |
| Na-pyruvate | 0.172 |

The dissolution rate was measured by placing a fiber according to the present invention and a commercial inorganic fiber in a gap of the 0.2 $\mu$m of polycarbonate membrane filter fixed to plastic filter supporter followed by filtering the artificial body fluid through the filter. During the measurement, the artificial body fluid was maintained at 37 °C with a flow rate of 145 mL/day and pH was maintained at 7.4 $\pm$ 0.2 using $CO_2/N_2$ (50%/95%) gas.

The fibers had been leached for 40 days to exactly determine the dissolution of fiber which takes place for a long time, and the weights of the fiber were measured at given intervals (5, 10, 20, 30 and 40 days). The filtered artificial body fluids were analyzed with using Inductively Coupled Plasma Spectrometry (ICP) for determining the contents of Si, Ca, Mg, Al, etc. With using these results, the dissolution rate constants ($K_{dis}$) were determined from the above-mentioned equation 5.

Regarding the relationship between the dissolution rate constant and toxicity test in animal test, it has been reported that a fiber having $K_{dis}$ value (dissolution rate constant) of 100 ng/cm$^2$·hr or greater, does not cause fibrosis or tumor in animal inhalation test (see: Inhalation Toxicology, 12:26-280, 2000, Estimating in vitro glass fiber dissolution rate from composition., Walter Eastes, et al.). However, since a $K_{dis}$ value determined actually in biodegradability test using an artificial body fluid (a physiological saline solution) has a maximum deviation of $\pm$30 %, to be called a biodegradable fiber, the $K_{dis}$ value should be at least 150 ng/cm$^2$·hr. In the present invention, to develop a fiber having more excellent solubility in an artificial body fluid, the threshold was set to 200 ng/cm$^2$·hr.

**EXAMPLES**

**Test Example 1: Fiberizability**

After preparing fiber compositions with the specified ingredients and contents (as shown in TABLE 2), fibers were manufactured using the conventional RCF inorganic fiber production process.

The results of fiberization ability, average fiber diameter, unfiberized shot content, melting viscosity ratio, and production yield of the produced fiber are also shown in TABLE 2.

**TABLE 2**

| Fiber composition | Ingredients (wt%) | | | | | | | | Fiberization ability | Average diameter ($\mu$m) | Shot content (%) | Melting viscosity ratio | Production yield (%) |
|---|---|---|---|---|---|---|---|---|---|---|---|---|---|
| | $SiO_2$ | CaO | MgO | $ZrO_2$ | $Al_2O_3$ | $Na_2O$ | $K_2O$ | Impurity | | | | | |
| Example 1 | 76.13 | 15.28 | 4.05 | 1.01 | 0.11 | 2.52 | 0.54 | 0.36 | Yes | 4.0 | 23 | 1.20 | 70 |
| Example 2 | 76.75 | 14.87 | 3.64 | 1.47 | 0.19 | 2.72 | 0.22 | 0.14 | Yes | 3.9 | 24 | 1.24 | 70 |
| Example 3 | 76.54 | 14.01 | 4.85 | 1.06 | 0.35 | 2.91 | 0.08 | 0.20 | Yes | 4.1 | 22 | 1.34 | 69 |
| Example 4 | 75.40 | 15.13 | 5.61 | 0.57 | 0.14 | 2.60 | 0.14 | 0.41 | Yes | 4.1 | 25 | 1.25 | 66 |
| Example 5 | 76.08 | 15.48 | 3.11 | 1.22 | 0.23 | 3.15 | 0.59 | 0.14 | Yes | 3.6 | 22 | 1.43 | 71 |
| Example 6 | 77.63 | 13.61 | 4.59 | 0.93 | 0.43 | 2.51 | 0.04 | 0.26 | Yes | 4.3 | 24 | 1.31 | 66 |
| Example 7 | 77.14 | 13.15 | 3.74 | 1.67 | 0.26 | 3.24 | 0.36 | 0.44 | Yes | 4.2 | 23 | 1.27 | 68 |
| Comparative Example 1 | 51.72 | 0.10 | 0.09 | - | 47.23 | 0.21 | 0.05 | 0.60 | Yes | 4.5 | 13 | 1.00 | 80 |
| Comparative Example 2 | 64.75 | - | - | 14.92 | 19.78 | - | - | 0.55 | Yes | 3.8 | 32 | 1.89 | 52 |
| Comparative Example 3 | 74.25 | 20.13 | 2.01 | 2.03 | 1.18 | - | - | 0 40 | Yes | 4.0 | 34 | 2.66 | 44 |
| Comparative Example 4 | 75.18 | 14.40 | 2.28 | 1.69 | 1.78 | 3.12 | 1.21 | 0-34 | Yes | 4.3 | 30 | 1.84 | 52 |
| Comparative Example 5 | 75.02 | 14.11 | 2.72 | 4.14 | 0.06 | 2.84 | 0.33 | 0.78 | Yes | 5.1 | 33 | 1.82 | 46 |
| Comparative Example 6 | 76.55 | 17.36 | 1.72 | 1.63 | 1.88 | - | - | 0.86 | Yes | 4.2 | 31 | 1.95 | 46 |
| Comparative Example 7 | 75.21 | 18.51 | 5.70 | 0.03 | 0.13 | - | - | 0.42 | Yes | 4.0 | 48 | 1.64 | 52 |
| Comparative Example 8 | 74.37 | 15.06 | 3.97 | 0.47 | 0.94 | 4.52 | 0.40 | 0 27 | Yes | 4.1 | 23 | 0.90 | 71 |
| Comparative Example 9 | 75.08 | 19.95 | 0.53 | 2.03 | 0.16 | 2.10 | - | 0.15 | Yes | 4.1 | 35 | 1.71 | 51 |

| Fiber composition | Ingredients (wt%) | | | | | | | | Fiberization ability | Average diameter ($\mu$m) | Shot content (%) | Melting viscosity ratio | Production yield (%) |
|---|---|---|---|---|---|---|---|---|---|---|---|---|---|
| | $SiO_2$ | CaO | MgO | $ZrO_2$ | $Al_2O_3$ | $Na_2O$ | $K_2O$ | Impurity | | | | | |
| Comparative Example 10 | 75.96 | 18.55 | 0.27 | 1.99 | 0.15 | 2.80 | 0.13 | 0.15 | Yes | 4.1 | 29 | 1.96 | 57 |
| Comparative Example 11 | 75.46 | 19.78 | 0.30 | 1.46 | 0.14 | 2.54 | 0.17 | 0.15 | Yes | 4.3 | 30 | 2.01 | 55 |
| Comparative Example 12 | 78.53 | 0.24 | 18.67 | - | 1.73 | - | - | 0.83 | Yes | 4.5 | 42 | 2.58 | 48 |
| Comparative Example 13 | 81.49 | 12.39 | 3.45 | 1.26 | 1.04 | - | - | 0.37 | No | 6.0 | 55 | 4.29 | 36 |
| Comparative Example 14 | 83.27 | 9.86 | 3.11 | 2.02 | 1.28 | - | - | 0.46 | No | 6.1 | 60 | 5.19 | 32 |

As shown in the above TABLE 2, the average fiber diameter generally tends to increase with the increase of $SiO_2$ content, showing some differences in the average fiber diameter, unfiberized shot content, melting viscosity ratio, and production yield due to the combination of the other ingredients such as CaO, MgO, $Al_2O_3$, $Na_2O$, $K_2O$ and $ZrO_2$.

The fiber with a coarse fiber diameter and a rough surface generally has disadvantages of a low heat insulating effect and unfriendliness to the touch. However, it can be mentioned that the fiber prepared with the fiber composition according to the present invention has high-quality property because its average fiber diameter (3.6-4.3 $\mu$m) is smaller than that of commercial ceramic fiber (6 $\mu$m), and such small average fiber diameter can be expected to give an excellent heat insulating effect.

Also, the fiber produced with the present fiber compositions further comprising a small amount of $Na_2O$ or $K_2O$ according to Examples 1-7 exhibited high fiberization yield due to the low shot contents of less than 30% in a range of 22-25 %.

The fiber prepared with the composition according to Comparative Example 7 comprises very small amounts of $Al_2O_3$ and $ZrO_2$ with the unfiberized shot content rising up to 48 % due to the increase of melt viscosity. In contrast, in the fiber prepared according to Example 4 comprising 0.71 wt% of $Al_2O_3 + ZrO_2$, the unfiberized shot content decreased down to 25 %, which shows the fact that the total amount of intermediate oxides such as $Al_2O_3$ and $ZrO_2$ should be 0.5 wt% or higher.

The fiber prepared with the composition according to Comparative Example 9 comprises very small amount of $Na_2O$ with the unfiberized shot content rising up to 35 %. In contrast, in the fiber prepared according to Example 1 comprising 2.52 wt% of $Na_2O$, the unfiberized shot content decreased down to 23 %, and also in the fiber prepared according to Example 7 comprising 3.24 wt% of $Na_2O$, the unfiberized shot content decreased down to 23 %, which shows the fact that the content of $Na_2O$ should be 2.5-3.5 wt%.

Moreover, in the range of still higher than 80 wt% of $SiO_2$ content as in Comparative Examples 13-14, the melt viscosity was high thus producing fibers with coarse diameter and long length; and unfiberized shot content was high thus exhibiting a lowered fiberization yield, thereby causing the fiberization to be impossible to carry out.

To verify the relationship between the fiberization viscosity and production yield of the fiber produced with the fiber composition according to the present invention, the melting viscosity ratio and production yield of the produced fiber are shown in TABLE 2.

The fiberization viscosity should have been measured to a molten fiber composition, but it was impossible to measure the fiberization viscosity when draining the melt from a melting furnace because of high temperature of the melt, 2000 °C or higher. Accordingly, the relative melting viscosity ratio was calculated theoretically, and from the calculation results, it can be known that a comparative example without using alkali metal exhibited commonly higher melting viscosity ratio than those with using alkali metal, which shows the fact that the content of alkali metal affects the melting viscosity ratio significantly.

When the viscosity of the conventional $Al_2O_3$-$SiO_2$ (RCF-AS) based fiber composition (Comparative Example 1) having a good production yield was set to 1 as reference viscosity, the melting viscosity ratios of Examples 1-7 were in a range of 1.20-1.43 and those of Comparative Examples 2-14 were in a range of 1.64-5.91. Generally, the increase of $SiO_2$ content causes the increase of fiberization viscosity and thus the decrease of production yield. However, in case of the fiber composition according to the present invention, even though the composition was highly viscous with a $SiO_2$ content of 75 wt% or higher, the deviation of melting viscosity ratio from the reference viscosity (i.e. 1) was small and thus the production yield increased.

In Comparative Examples, the production yield decreased drastically due to their large deviations of melting viscosity ratio from the reference viscosity. In Comparative Example 8, the production yield increased up to 71 % because of its small deviation of melting viscosity ratio from the reference viscosity, but the solubility in body fluid and the thermal linear shrinkage were decreased.

That is, even in a high viscosity range with high $SiO_2$ content, the fiber composition according to the present invention can increase the production yield which is a ratio of produced fiber amount to drained melt amount, by adjusting the melting viscosity ratio appropriately, which is consistent with the result of unfiberized shot content, a ground for determining fiberization yield. Actually, the production yield of fiber with the fiber composition according to the present invention was in a range of 66-71 %, which is greatly different from those of Comparative Examples.

**Test Example 2: Biodegradability and thermal linear shrinkage**

The following TABLE 3 shows the dissolution rate constant in an artificial body fluid and the thermal linear shrinkage (1100 °C / 24 hours) for each fiber composition prepared according to aforementioned Examples and Comparative Examples.

TABLE 3: Dissolution rate constant in artificial body fluid and thermal linear shrinkage

| No. | Dissolution rate constant $K_{dis}$ (ng/cm$^2$·hr) | Linear Shrinkage (%) (1100 °C / 24 hours) |
|---|---|---|
| Example 1 | 252 | 1.5 |
| Example 2 | 273 | 2.3 |
| Example 3 | 302 | 1.6 |
| Example 4 | 423 | 2.1 |
| Example 5 | 451 | 2.4 |
| Example 6 | 380 | 1.9 |
| Example 7 | 326 | 2.4 |
| Comparative Example 1 | 3 | 1.4 |
| Comparative Example 2 | 15 | 1.1 |
| Comparative Example 3 | 129 | 2.7 |
| Comparative Example 4 | 182 | 2.9 |
| Comparative Example 5 | 116 | 2.6 |
| Comparative Example 6 | 85 | 2.1 |
| Comparative Example 7 | 550 | 6.9 |
| Comparative Example 8 | 490 | 14.3 |
| Comparative Example 9 | 134 | 4.3 |
| Comparative Example 10 | 117 | 4.9 |
| Comparative Example 11 | 100 | 3.9 |
| Comparative Example 12 | 280 | 4.5 |

As shown in the above TABLE 3, the fibers produced with the conventional RCF fiber compositions according to Comparative Examples 1 and 2 showed less than 30 ng/ cm$^2$·hr of dissolution rate constant. In contrast, the dissolution rate constant of the fibers produced with the fiber compositions according to Examples of the present invention were maintained in a range of 252-451 ng/cm$^2$·hr thereby showing a far better increased solubility in body fluid.

The compositions of Comparative Examples 3-6 with the $Al_2O_3 + ZrO_2$ content of more than 3 wt% showed thermal linear shrinkages of less than 3% but had low dissolution rate constants (129, 182, 116 and 85 ng/cm$^2$·hr, respectively). Thus, in an aspect of improvement of biodegradability of fiber, it was conclusively preferable to limit the amount of $Al_2O_3 + ZrO_2$ known as ingredients increasing durability, to 3 wt% or less. Also, the composition of Comparative Example 7 with the $Al_2O_3 + ZrO_2$ content of less than 0.5 wt% showed the significantly increased dissolution rate constant of 550 ng/cm$^2$·hr but had the increased thermal linear shrinkage of 6.9 %. Thus, in an aspect of improvement of heat resistance of fiber, it was conclusively preferable to limit the amount of $Al_2O_3 + ZrO_2$ to 0.5 wt% or more. In the fiber compositions according to the present invention, it was when an amount of $Al_2O_3 + ZrO_2$ did not exceed 2 wt% that the dissolution rate constant ($K_{dis}$) was maintained to 250 ng/ cm$^2$·hr or higher.

The composition of Comparative Example 8 with the $Na_2O$ content of 4.52 wt% showed high dissolution rate constant of 490 ng/cm$^2$·hr but had thermal linear shrinkage of 14.3 % thereby having poor heat resistance. Also, as shown in Comparative Example 12, the rapid increase of MgO content gave the dissolution rate constant of 280 ng/cm$^2$·hr and the thermal linear shrinkage of 4.5 % thereby giving poor heat resistance.

The compositions of Comparative Examples 9-11 had low dissolution rate constants even though their amounts of $Al_2O_3 + ZrO_2$ were 2.19, 2.14 and 1.60 wt% respectively, supposedly due to the decrease of amount of MgO. Even though the increase of crosslinking modifiers such as alkaline earth metal is generally expected to increase the dissolution rate constant, the above results show that the dissolution rate constant can be lowered even at the same amount of CaO + MgO, if the fiber composition comprises relatively too small amount of MgO. Therefore, in order to obtain a high dissolution rate constant, the amount of MgO should be 2 wt% or higher, at the same time the amount of $Al_2O_3 + ZrO_2$ should be approximately 2 wt% or less.

The composition of Example 7 with the $Na_2O$ content of 3.24 wt% showed the dissolution rate constant of 326 ng/cm$^2$·hr and the thermal linear shrinkage of 2.4 %, which shows that the inorganic fiber composition of the present

invention should comprise $Na_2O$ of 3.5 wt% or less.

Therefore, the contents where the compositions are fiberizable, highly biodegradable and well resistant to heat are 75-80 wt% of $SiO_2$, 13-20 wt% of CaO, 1-8 wt% of MgO, 0.5 wt% or less of $Al_2O_3$. 0.5-3 wt% of $ZrO_2$ and 2.5-3.5 wt% of $Na_2O$. In addition, when the amount of $Al_2O_3$ + $ZrO_2$ is 0.5-3 wt%, the dissolution rate constant in artificial body fluid becomes still higher.

Also, the fiber produced with the composition of Example of the present invention exhibited low thermal linear shrinkage of less than 3.0 % in a range of 1.5-2.4% when thermally treated at 1100 °C for 24 hours.

Therefore, the fiber which comprises 75-80 wt% of $SiO_2$, 13-20 wt% of CaO, 1-8 wt% of MgO, 0.5 wt% or less of $Al_2O_3$, 0.5-3 wt% of $ZrO_2$ and 2.5-3.5 wt% of $Na_2O$, has a small fiber diameter thereby giving good insulating effect, a small content of unfiberized material thereby being fiberizable, a good biodegradability, and very similar properties such as thermal linear shrinkage, compression strength and good restoration after compression, to those of conventional commercial ceramic fibers. Preferably, the dissolution rate constant in artificial body fluid becomes still higher when the amount of $Al_2O_3$ + $ZrO_2$ is 0.5-3 wt%, the fiberization yield and production yield increases when the amount of $R_2O$ is 2.5-4 wt%. More preferably, the properties are even more improved when the amount of CaO + MgO is 15-26 wt%.

As explained above, the fiber produced with the composition of Example of the present invention exhibits a good dissolution rate constant in artificial body fluid, good fiberization characteristics, a good productivity with high fiberization yield, and a low thermal linear shrinkage even when thermally treated at 1100 °C for 24 hours and thus a good applicability to a high-temperature heat insulating material.

## INDUSTRIAL APPLICABILITY

As described above, the biodegradable fiber for a high-temperature insulating material produced with the composition of the present invention has a much superior dissoluton rate in body fluid compared with conventional ceramic fiber, thus enabling to decrease harmfulness since it can be easily dissolved and removed when inhaled into the lung. Moreover, considering the disadvantages of conventional biodegradable ceramic fibers, that is, the deterioration of property at high temperature, the fibers according to the present invention showing a shrinkage of 3% or less after thermal treatment at 1100 °C for 24 hours have good thermal, mechanical high-temperature properties substantially equal to those of conventional high-temperature insulating materials. Further, the present invention has an economical advantage in that the low-priced materials such as dolomite or limestone can be utilized instead of high purity MgO and that the conventional fiber production equipment can be still employed giving a high yield.

## Claims

1. A fiber composition comprising 75-80 wt% of $SiO_2$, 13-20 wt% of CaO, 1-8 wt% of MgO, 0.5 wt% or less of $Al_2O_3$, 0.5-3 wt% of $ZrO_2$, and 2.5-4 wt% of $R_2O$, wherein R is an alkali metal.

2. The fiber composition according to claim 1 wherein the sum of the amounts of CaO and MgO is 15-26 wt% and the amount of MgO is 2-8 wt%.

3. The fiber composition according to claim 1 wherein the amount of $Na_2O$ is 2.5-3.5 wt%.

4. The fiber composition according to claim 1 wherein the sum of the amounts of $ZrO_2$ and $Al_2O_3$ is 0.5-3 wt%

5. The fiber composition according to claim 1 wherein the amount of impurities comprising $Fe_2O_3$, $TiO_2$, $B_2O_3$ and $P_2O_5$ is 1 wt% or less.

6. A fiber for a heat insulating material comprising the composition according to any of claims 1-5, wherein a shot content is 30 wt% or less, and a thermal linear shrinkage (upon exposure to 1100 °C for 24 hours) is 3% or less.

7. A fiber for a heat insulating material comprising the composition according to any of claims 1-5, wherein an average fiber diameter is 6 $\mu$m or thinner, and a solubility constant in artificial body fluid is 200 ng/cm$^2$·hr or higher.

## Patentansprüche

1. Eine Faserzusammensetzung, umfassend 75-80 Gew.-% an $SiO_2$, 13-20 Gew.-% an CaO, 1-8 Gew.-% an MgO, 0,5 Gew.-% oder weniger an $Al_2O_3$, 0,5-3 Gew.-% an $ZrO_2$, und 2,5-4 Gew.-% an $R_2O$, wobei R ein Alkalimetall ist.

**2.** Die Faserzusammensetzung gemäß Anspruch 1, wobei die Summe der Mengen an CaO und MgO 15-26 Gew.-% ist und die Menge an MgO 2-8 Gew.-% ist.

**3.** Die Faserzusammensetzung gemäß Anspruch 1, wobei die Menge an $Na_2O$ 2,5-3,5 Gew.-% ist.

**4.** Die Faserzusammensetzung gemäß Anspruch 1, wobei die Summe der Mengen an $ZrO_2$ und $Al_2O_3$ 0,5-3 Gew.-% ist.

**5.** Die Faserzusammensetzung gemäß Anspruch 1, wobei die Menge an Verunreinigungen, umfassend $Fe_2O_3$, $ToO_2$, $B_2O_3$ und $P_2O_5$, 1 Gew.-% oder weniger ist.

**6.** Eine Faser für ein hitzeisolierendes Material, umfassend die Zusammensetzung gemäß irgendeinem der Ansprüche 1-5, wobei der Shot-Gehalt 30 Gew.-% oder weniger beträgt, und die lineare thermische Schrumpfung (nach Behandlung bei 1100°C für 24 Stunden) 3 % oder weniger beträgt.

**7.** Eine Faser für ein hitzeisolierendes Material, umfassend die Zusammensetzung gemäß irgendeinem der Ansprüche 1-5, wobei ein durchschnittlicher Faserdurchmesser 6 $\mu$m oder dünner ist und eine Löslichkeitskonstante in einer künstlichen Körperflüssigkeit 200 ng/cm$^2$·h oder mehr beträgt.

**Revendications**

**1.** Composition de fibre comprenant 75 à 80% en poids de $SiO_2$, 13 à 20% en poids de CaO, 1 à 8% en poids de MgO, 0,5% en poids ou moins de $Al_2O_3$, 0,5 à 3% en poids de $ZrO_2$, et 2,5 à 4% en poids de $R_2O$, dans lequel R est un métal alcalin.

**2.** Composition de fibre selon la revendication 1, dans laquelle la somme des quantités de CaO et de MgO est de 15 à 26% en poids et la quantité de MgO est de 2 à 8% en poids.

**3.** Composition de fibre selon la revendication I dans laquelle la quantité de $Na_2O$ est de 2,5 à 3,5% en poids.

**4.** Composition de fibre selon la revendication 1, dans laquelle la somme des quantités de $ZrO_2$ et $Al_2O_3$ est de 0,5 à 3% en poids.

**5.** Composition de fibre selon la revendication 1, dans laquelle la quantité des impuretés comprenant $Fe_2O_3$, $TiO_2$, $B_2O_3$ et $P_2O_5$ est de 1% en poids ou moins.

**6.** Fibre pour un matériau isolant thermique comprenant la composition selon l'une quelconque des revendications 1 à 5, dans laquelle une teneur en grenaille est de 30% en poids ou moins, et un rétrécissement linéaire thermique (à l'exposition à 1 100°C pendant 24 heures) est de 3% ou moins.

**7.** Fibre pour un matériau isolant thermique comprenant la composition selon l'une quelconque des revendications 1 à 5, dans laquelle un diamètre moyen des fibres est de 6 $\mu$m ou plus fin, et une constante de solubilité dans un fluide corporel artificiel est de 200 ng/cm$^2$.h ou plus.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5332699 A
- US 5994247 A
- US 5955389 A
- US 5928975 A
- US 5811360 A

- EP 1323687 A
- EP 1544177 A
- US 5874375 A
- US 6025288 A

**Non-patent literature cited in the description**

- *Inhalation Toxicology,* 2000, vol. 12, 26-280